# EUROPEAN PATENT APPLICATION

(11) **EP 1 798 113 A2**
(43) Date of publication of application: **20.06.2007**
(21) Application number: 06126271.3
(22) Date of filing: 15.12.2006
(51) Int. Cl.: B60R 13/04

(54) **Vehicle molding clip mounting structure**

(30) Priority: 16.12.2005 JP 2005363697
(71) Applicant: Newfrey LLC, Newark, Delaware 19711 (US)
(72) Inventor: Sugiura, Izuru, Kariya-shi Aichi 448-8650 (JP); Dendo, Masashi, Toyohashi-shi Aichi (JP)
(74) Representative: Haar, Lucas Heinz Jörn

(57) **Abstract**

A structure for mounting a molding (16) or garnish to a vehicle pillar comprises a two-part clip (17). The clip parts (41, 42) are joined to one another so as to clamp a flange (23) of the molding (16) between them. A rib (47) on one clip part (41) is inserted through a hole (28) in the molding flange (23).

## Description

### Background of the Invention

On the windshield or roof, for example, of an automobile, a metal or plastic molding or garnish is set in place for providing a covering so that glass edges and body grooves are not exposed to impair the outward appearance. Plastic retainers or clips may be used in mounting structures for this purpose. More specifically, when a metal molding is mounted to a vehicle body, a structure may be employed in which a pair of molding flanges is mated with a plastic product. See, for example, TOKKAI (unexamined Japanese Patent Application) No. H10-315879/1998 (Gazette).

In the prior art, the distance between the flanges is often made wide in the interest of flange machineability. In such cases, the dimensional precision between the flanges may be inadequate, as a consequence of which adequate holding force between the metal molding and the clip may not be realized, and, sometimes, when an attempt is made to remove the metal molding and the clips from the vehicle body, the metal molding disengages from the clips and the clips are left remaining on the vehicle body.

When the flanges are not symmetrical, the holding force of the clip and the metal molding tends to be uneven, so that disengagement occurs at places where the holding force is inadequate. In order to avoid this problem, it is necessary to provide more engagement surface when mounting the clips to the metal molding, but this tends to increase the clip mounting load on the metal molding, and the workability of the mounting procedure declines.

It is important to provide balance in the rigidity between the mounting for the metal molding and the mounting to the vehicle body, relative to loading in the direction of metal molding removal. However, because the mounting to the metal molding and the mounting to the vehicle body involve the same parts, when the mounting of one or the other is weak and susceptible to failure, it is difficult to improve one without adversely affecting the other, and there is little freedom for clip shape modification or material modification. Moreover, it is sometimes very difficult to provide clip reinforcement in the limited space between the metal molding and the vehicle body.

### Brief Description of the Invention

Accordingly, an object of the present invention is to provide an improved vehicle molding mounting structure that alleviates problems associated with prior mounting structures.

In an embodiment of the invention, a two-part mounting clip is used in which a flange of a molding is clamped between clip parts that are joined to one another, and in which one of the clip parts has a protrusion that is inserted in a hole through the flange.

### Brief Description of the Drawings

The invention will be further described in conjunction with the accompanying drawings, which illustrate a preferred (best mode) embodiment, and wherein:
Fig. 1 is a fragmentary perspective view of a vehicle to which a mounting structure of the invention is applied;
Fig. 2 is a fragmentary perspective view showing details of the mounting structure;
Fig. 3 is a sectional view taken along A-A of Fig. 2;
Fig. 4 is a fragmentary perspective view showing a mounting structure of the invention as seen from a direction different from Fig. 2;
Figs. 5(a)-5(d) are, respectively, left-end, top, right-end, and front-side views of a first clip part of the mounting structure of the invention.
Fig. 6 is a perspective view of the first clip part;
Figs. 7(a)-7(d) are, respectively, top, front, right-side, and rear views of a second clip part of a mounting structure of the invention;
Fig. 8 is a perspective view of the second clip part;
Figs. 9(a), 9(b) and 9(d) are, respectively, top, front, and right-side views showing the clip parts connected to one another, and Fig. 9(c) is a sectional view showing the connected clip parts;
Fig. 10 is a perspective view showing the connected clip parts; and
Figs. 11 (a)-(d) are diagrammatic views showing an example of how an assembly of a molding and a clip may be used in conjunction with retainers to mount the assembly on a vehicle pillar.

### Detailed Description of the Invention

One embodiment of a molding mounting structure according to the present invention will now be described with reference to the drawings.

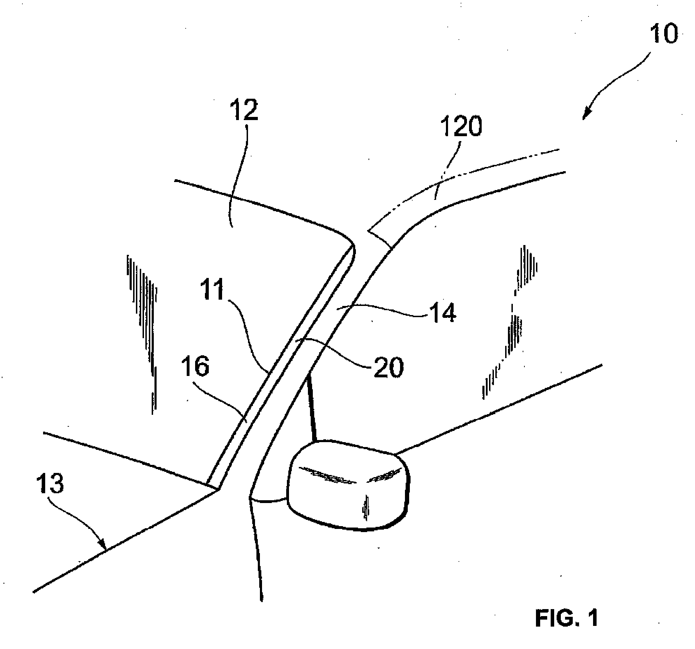

Fig. 1 shows a portion of the left-front side of a vehicle 10 to which this embodiment is applied, a vehicle molding assembly 11 being mounted so as to cover the gap between the side edge of a windshield glass 12 and the front pillar 14 of the vehicle body 13.

The vehicle molding assembly 11 has an elongated metal molding 16, and a two-part plastic clip 17 for mounting the metal molding 16 on the front pillar 14.

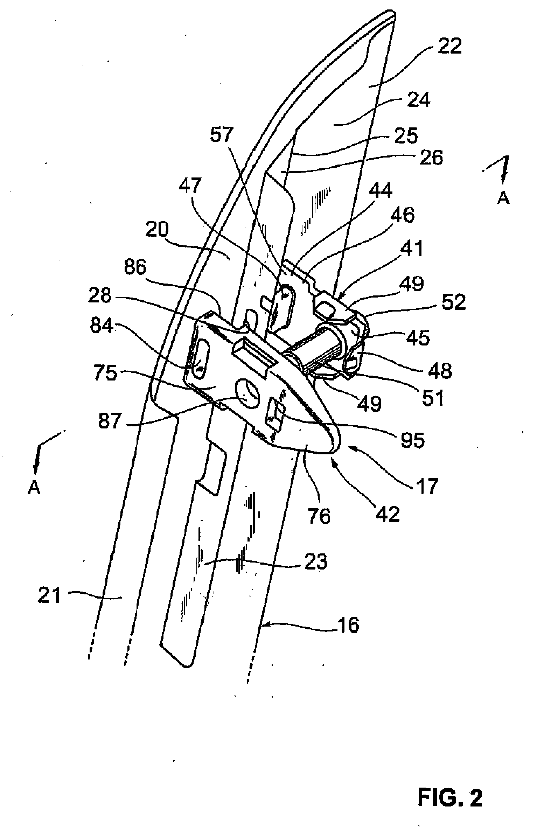

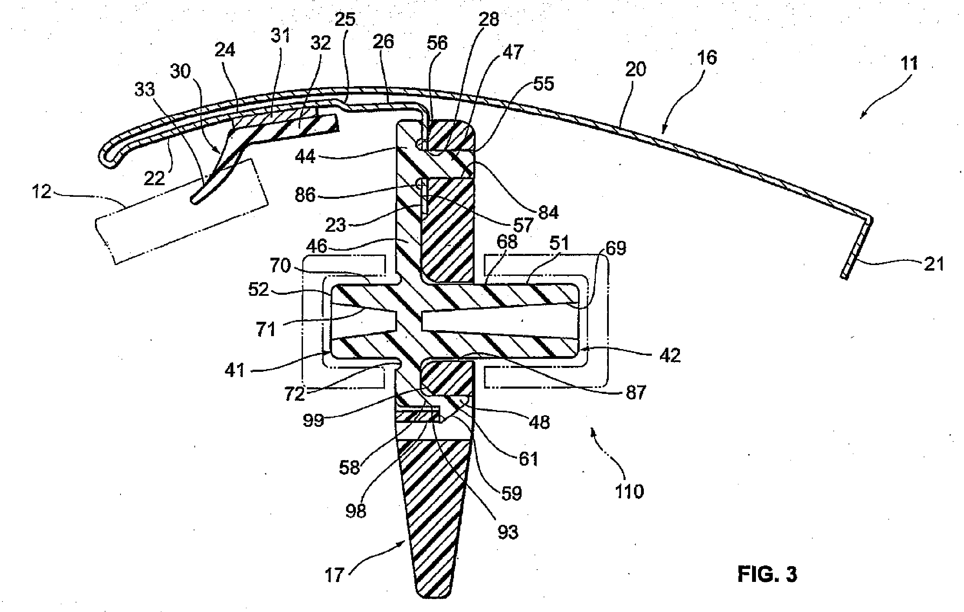

As shown in Figs. 2 and 3, the metal molding 16 includes: a main panel part 20 that extends along the longitudinal dimension of the molding 16 and is slightly convex on its front side in a width dimension, a flange 21 that extends out from one edge of the main panel part 20, bending to the back side relative to the main panel part 20, and extending along the longitudinal dimension of the molding 16, a folded-back panel part 22 that is folded back from the other edge of the main panel part 20 along the width dimension, substantially 180°, to the back side of the main panel part 20, and extending along the longitudinal dimension of the molding 16, and a flange 23 that extends out from an edge of the folded-back panel part 22, bending substantially perpendicularly to the folded-back panel part 22 and the main panel part 20, and extending along the longitudinal dimension of the molding 16. The metal molding may be pressed from a single metal plate, for example. Also, the metal molding can be produced by roll-molding a metal plate.

The folded-back part 22 has a panel part 24 extending at a constant distance from the main panel part 20, a step panel part 25 that protrudes slightly from an edge of the panel part 24 in a direction away from the main panel part 20, and a flat panel part 26 that extends from the step panel part 25.

In the form shown, the folded-back panel part 22 extends over less than one-half of the width of the molding 16, so that the flange 23 is located at an intermediate position along the width dimension of the main panel part 20, slightly to the left of the width center of the main panel part 20 in Fig. 3.

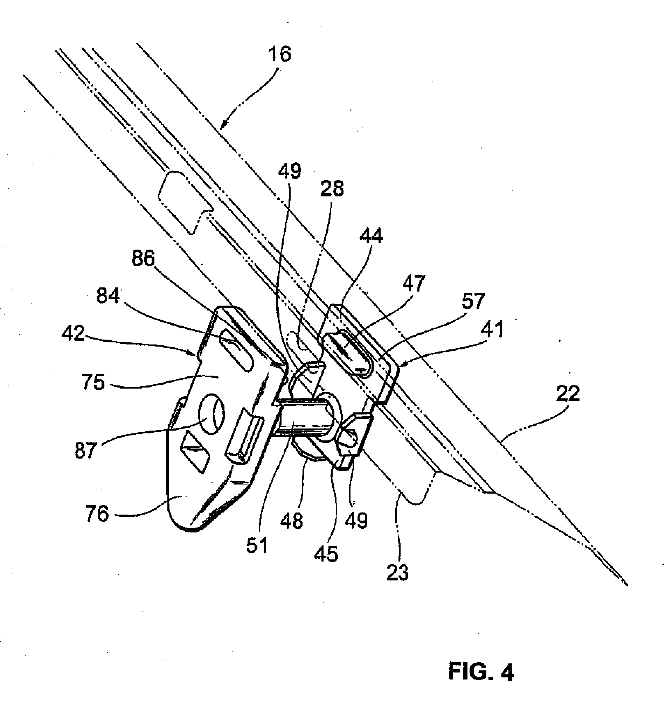

As shown in Figs. 2 and 4, the flange 23 of the metal molding 16 has an elongated hole 28 through the flange, extending along the longitudinal dimension of the flange. The hole 28 may be formed by press molding, for example.

As shown in Fig. 3, on the back side of the panel part 24 there is a rubber seal member 30 fixed along the length of the molding by an adhesive layer 31 and having a lip 33, the tip of which extends out diagonally away from the folded-back panel part 22 to engage the windshield glass 12.

The two-part clip 17 comprises a first clip part 41 and a second clip part 42, both of which are preferably molded of plastic.

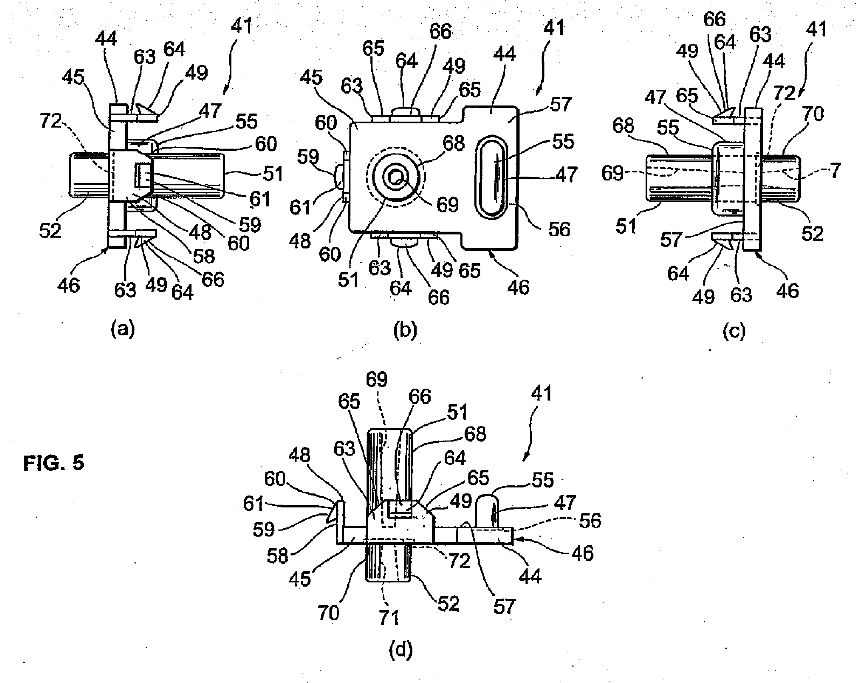

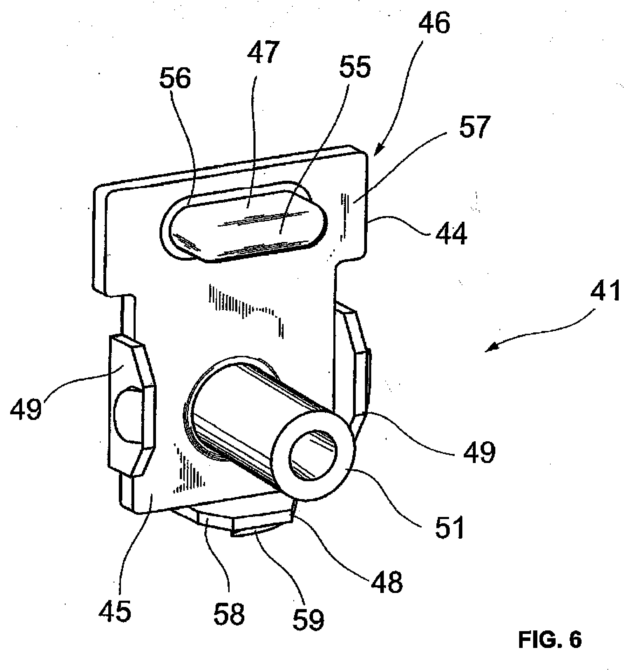

The first clip part 41, as shown in Figs. 5(a)-5(d) and 6, has a base 46 constituted by a generally rectangular panel part 44 and a generally square panel part 45 in the same plane. A rib (projection) 47 protrudes perpendicularly from the panel part 44 near one end of the base 46, and a pawl 48 protrudes from the opposite end of the base perpendicular to the panel 45 on the same side as the rib 47. See Figs. 5(b) and 5(d). As shown in Fig. 5(a), pawls 49 protrude from opposite edge regions of the base 46 and extend perpendicular to the base in the same direction as the pawl 48. A tubular load receiver rib (projection) 51 extends perpendicularly from one side of the base, and an integral tubular load receiver rib (projection) 52 extends perpendicularly from the opposite side of the base, midway between the pawls 49.

The rib 47 has a beveled tip 55. A recess 56 is formed around the periphery of the rib. Surface 57 of panel part 44 is a clamping surface that is flat except for the rib 47 and the recess 56.

Pawl 48 includes a flat plate part 58 extending in the thickness direction of the base 46 and a pawl projection 59 with an incline surface 61 between beveled edges 60 of plate part 58.

Pawls 49 have the same shape and protrude from the base 46 by about the same amount as the pawl 48. Each pawl 49 has a flat plate part 63 perpendicular to the base and a pawl projection 64 with an inclined surface 66 between beveled edges 65 of plate part 63.

The load receiver rib 51 extends from the base 46 much farther than the rib 47. The outer surface 68 of the rib 51 is cylindrical, and the inner surface 69 is tapered, the diameter of which is smaller toward the base 46.

The load receiver rib 52 is shorter in length than the rib 51 and has a cylindrical outer surface 70 and a tapered inner surface 71, the diameter of which is smaller toward the base 46. A recess 72 is formed around the entire circumference of the rib 52.

The first clip part 41 is substantially symmetrical about a central longitudinal plane perpendicular to the plane 44.

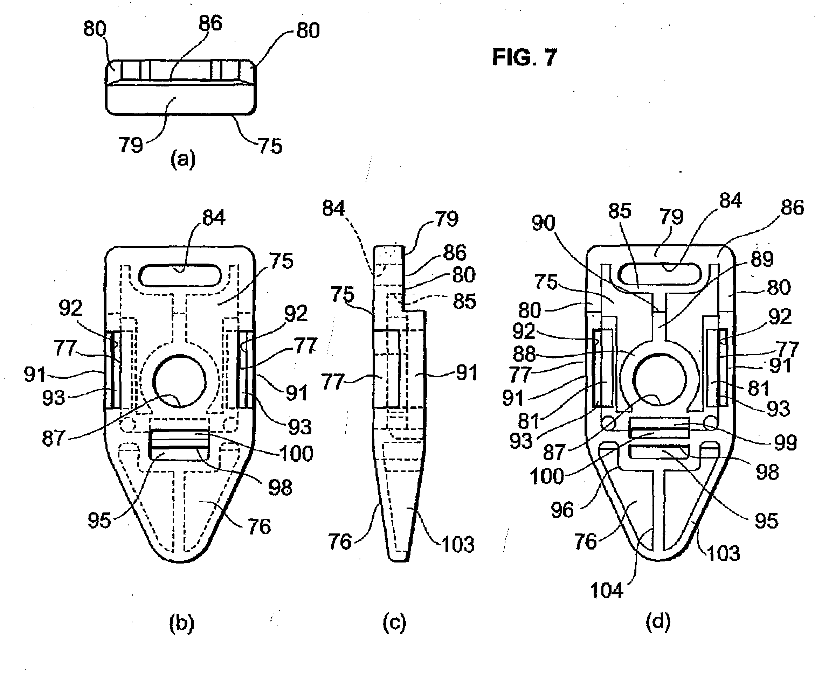

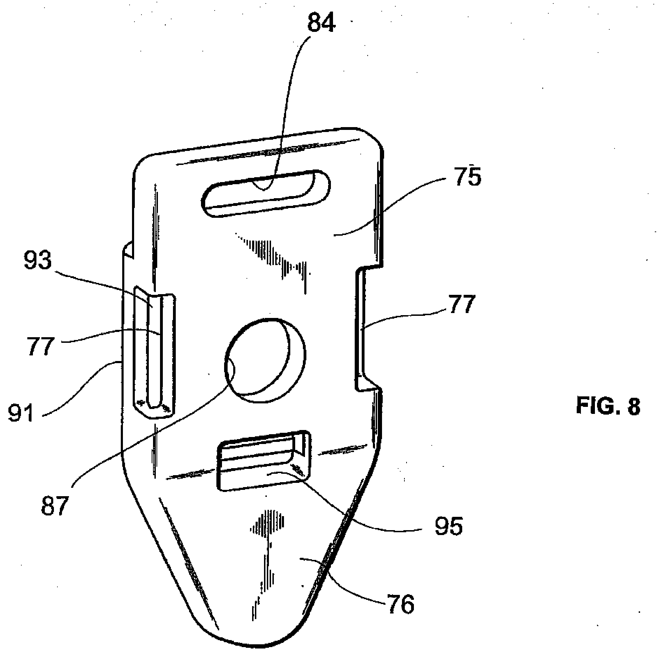

The second clip part 42, as shown in Figs. 7(a)-7(d) and 8, has a substantially rectangular base 75 with a tapered end 76. Elongated cavities 77 are formed along opposite edges of the base 75 toward the tapered end 76. As shown in Figs. 7(c) and 7(d) walls 79 and 80 are formed at the end of base 75 opposite to the tapered part 76. Beveled parts 81 are formed adjacent to the cavities 77, as shown in Fig. 7(d).

A hole 84 through the base 75 elongated in the width dimension of the base is provided through the end of the base opposite to the tapered part 76. Hole 84 is surrounded by the wall 79 and a wall 85 connected to wall 79 as shown in Fig. 7(d).

A hole 87 through the base 75 is provided toward the tapered part 76 and is surrounded by a cylindrical wall 88. Walls 85 and 88 are connected by a wall 89 via a step 90. Surface 86 is a flat clamping surface. See Figs. 7 (c) and 7(d).

In the walls 80 at the position of the cavities 77, bridges 91 are formed so as to join the open sides of the cavities 77, respectively, at positions higher than the walls 80. In these bridges 91, cavities 92 are formed so as to be in opposition to the cavities 77, respectively, as seen from the panel thickness direction of the base 75, and holes 93 are formed by the cavities 77 and 92.

At a location where the tapered part 76 begins, a rectangular hole 95 is formed, elongated in the width dimension of the base 75. The entire circumference of hole 95 is enclosed by a rectangular column-shaped wall 96 that rises from the base on the same side as wall 79. Wall 96 is connected to the cylindrical wall 88, forming a high step, wall 88 of which is low, and the side opposite to wall 88 is high, being the same height as the bridges 91.

A bridge 98 is formed so as to extend across the hole 95 in the width dimension of the base 75 at the same height as the bridges 91. A hole 100 is formed by the bridge 98 and a beveled part 99 at one side of the hole 95.

On the tapered part 76, a V-shaped wall 103 is formed, rising from the base 75 in the thickness dimension, and a wall 104 is formed so as to join a tip of wall 103 and wall 96. Surfaces of walls 103 and 104 are inclined in a direction transverse to the inclination of the tapered part 76, so that the tapered part 76 is tapered in both width and thickness dimensions.

To connect the clip parts 41 and 42 to one another and to the molding 16, as shown in Figs. 2-4, rib 47 of clip part 41 is inserted in the hole 28 in the flange 23 of the molding 16, and then is inserted in hole 84 in the second clip part 42. The load receiver rib 51 of the first clip part 41 is inserted through the hole 87 in the second clip part 42. Pawl 48 is pushed into the hole 100 shown in Figs. 7(b) and 7(d), as pawls 49 are pushed into the holes 93.

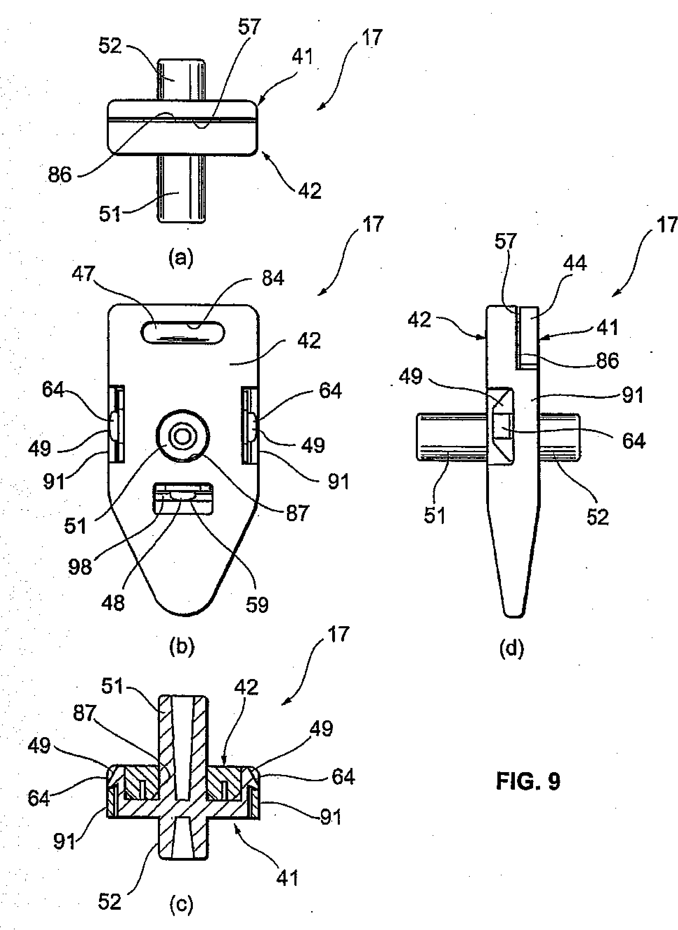

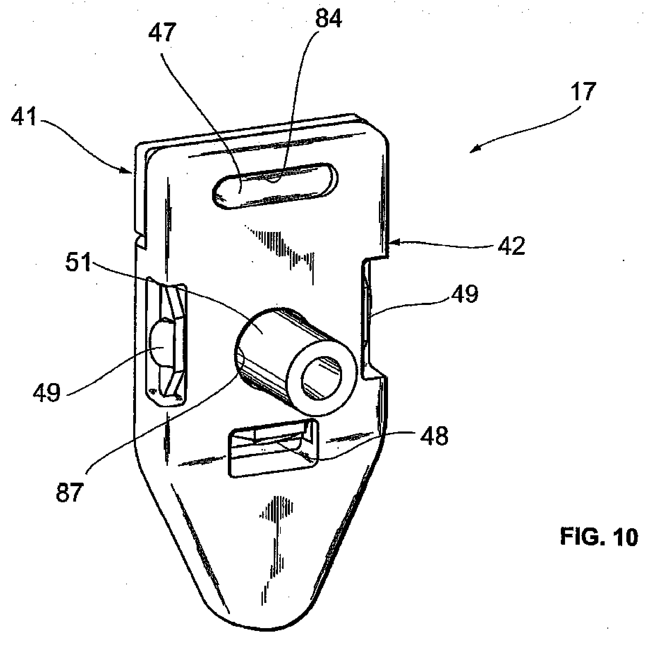

The projection 59 of the pawl 48, guided by the inclined surface 61, rides over the bridge 98, causing it to deform resiliently as itself reforms resiliently, and is guided by the beveled edges 99, so as to enter the hole 100, so that the pawl projection 59 engages the bridge 98. Simultaneously therewith, the projections 64 of the pawls 49, guided by the inclined surfaces 66, right over the bridges 91, causing them to deform resiliently as they deform resiliently themselves, and are guided by the beveled edges 81 so as to enter the holes 93, and so that the pawl projections 64 engage the bridges 91. Thereby, as shown in Figs. 9(a)-9(d) and 10, the first clip part 41 and the second clip part 42 are securely connected to one another, so as not to wobble.

The hole 28 in the flange 23 of the metal molding 16 is engaged by rib 47 of the clip 17 without any gap either in the longitudinal dimension or the width dimension, and the flange 23 will be clamped, without any gap, by the clamping surface 57 of the rectangular panel part 44 of the first clip part, on the one hand, and the clamping surface 86 of the second clip part 42, on the other hand. In consequence, the clip 17 of the metal molding 16 is secured and prevented from turning.

As indicated in Fig. 3, the assembly of the molding 16 and the clip 17 cooperates with a suitable retainer 110 (shown diagrammatically in phantom lines) for attachment to a vehicle pillar. For example, the retainer may be of the type shown and described in U.S. Patent Application No. 11/564,009 filed November 28, 2006. Another suitable retainer is disclosed in Japanese Publication Number JP2004161153.

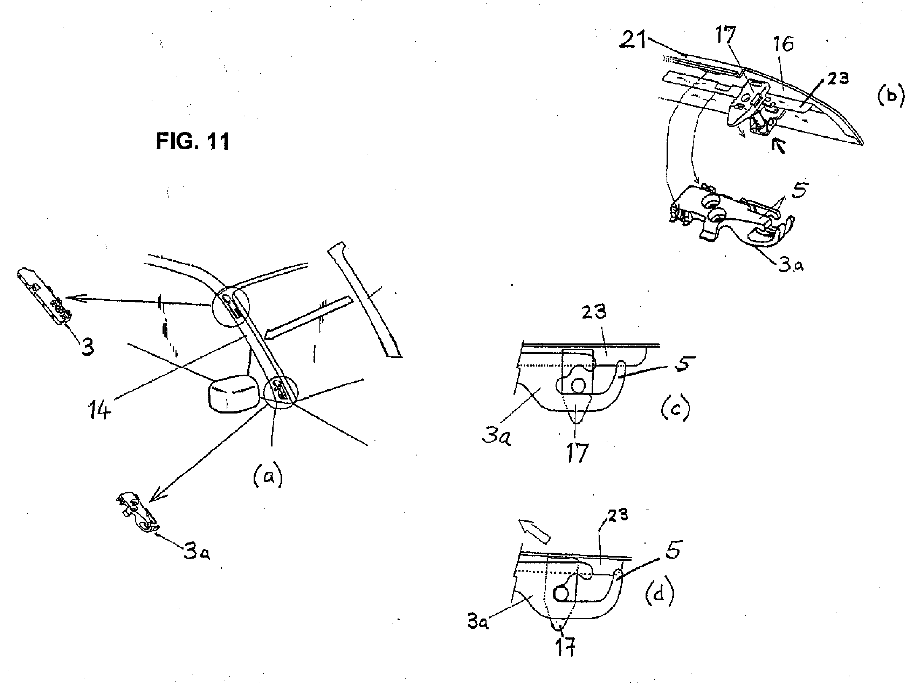

Figs. 11 (a)-(d) illustrate how an assembly of the molding (garnish) 16 and the clip 17 can be used together with the retainers 3 and 3a of the above-mentioned U.S. Application to mount the assembly on a vehicle pillar 14. As shown in Fig. 11 (a), two retainers 3 and 3a are mounted on the vehicle pillar 14. The assembly of the clip 17 and the garnish 16 shown fragmentarily in Fig. 11 (b) is then mounted on the retainers. The flanges 21 and 23 of the garnish 16 engage opposite side edges of the retainers and are held thereon by engagement means, such as the elastic clamping pieces and the elastic fastening pieces. The load receiver ribs 51 and 52 project from opposite sides of the assembled clip parts into the hook unit 5 at one end of the retainer 3a, as shown in Fig. 11 (c). Any attempt of the garnish to separate from the retainers due to wind pressure is resisted by engagement of the load receiver ribs 51 and 52 and the hook unit 5, as shown in Fig. 11(d).

With the vehicle molding assembly 11 mounted in the foregoing manner, the lip 33 of the seal 30 affixed to the molding 16 will make contact with the outer surface of the windshield glass 12, and another seal member (not shown) will make contact with the outer surface of the front pillar 14, sealing associated gaps.

When the vehicle molding assembly 11 is removed from the vehicle body 13 in order to perform maintenance or the like, the load from the retainers on the vehicle body 13 will be received by the load receiver ribs 51 and 52, and the metal molding 16 will be removed while the load from the clip 17 is being received by the hole 28 in the flange 23, in which the rib 47 engaged.

In the invention, because the mounting of the clip 17 to the metal molding 16 is established by engagement of the rib 47 of the first clip part 41 in the hole 28 in the metal molding 16, the holding force and set-up load will no longer be affected by the dimensional precision of, or the outer shape deformation, in the metal molding 16, where precision is comparatively difficult to realize, compared to a structure in which retainers are merely assembled between a pair of flanges of a metal molding.

Also, in the construction of the invention, enhancement of the rigidity of the mounting of a metal molding can be made to correspond with modifications of the shapes or sizes of materials or the like of the rib 47 and the hole 28, and it becomes possible to effect such enhancement easily, without making the clip 17 larger.

Furthermore, there is increased freedom to modify the shape and the material of the clips, and it becomes possible to effect enhancement of the rigidity in the clip 17 at the mounting site on the vehicle body without making the clip larger. Also, by virtue of the elongation of rib 47 and hole 28, a configuration is realized which prevents turning of the first clip part 41 relative to the metal molding 16.

Furthermore, by virtue of the construction of the invention, if only the first clip part 41 is made of a strong material exhibiting high load resistance, both the rigidity of the mounting of the clip 17 to the metal molding 16 and the load resistance when removing the molding from the vehicle body 13 can be enhanced. A first clip part 41 may be formed, for example, of a carbon fiber reinforced resin material (e.g., CFRP, GFRP, KFRP) or the like.

In addition, because the first and second clip parts are attached to one another by engaging pawls, they can be easily set up. When the first clip part 41 is made of a strong material, the second clip part 42, with its bridges 98 and 91 for engaging pawls 48 and 49 in the first clip part 41, can be made of a material of higher flexibility (POM, for example) that will readily engage, so that the set up load between the first and second clip parts can be made lighter. The same will be true if the pawls 48 and 49 are formed on the second clip part 42.

By providing a plurality of pawls, so that they protrude and are capable of elastically deforming outwardly from the base 45 of the first clip part 41, and causing those pawls to make contact with the folded-back panel part 22 of the metal molding 16, while elastically deforming them, provision may be made so that the rib 47 of the first clip part 41 is pressed against the side opposite from the folded-back panel part 22 of the hole 28 in the metal molding, so that wobble will be further suppressed.

If desired, a plurality of ribs 47 can be engaged in a plurality of holes 28, using an appropriately widened clip 17.

Although the invention has been described for the purpose of covering a gap between the windshield glass 12 and a front pillar 14 at one side of a vehicle, the invention can be applied to mounting a vehicle molding for covering a gap between the windshield glass 12 and the opposite pillar, and also to the mounting of various other vehicle moldings, such as, for example, in connection with the roof pillar 120 indicated by the phantom lines in Fig. 1, or the like.

While a preferred embodiment of the invention has been shown and described, it will be apparent from the foregoing description that changes can be made without departing from the principles and spirit of the invention, the scope of which is defined in the claims which follow.

## Claims

1. A structure for mounting a molding (16) on a vehicle body comprises a two-part clip (17), wherein the clip parts (41, 42) are constructed to be joined to one another in a manner that clamps a flange (23) of the molding (16) between the clip parts (41, 42).

2. The structure according to claim 1, wherein the clip (17) has a projection (47) constructed for insertion in an opening (28) of the flange (23) when the clip parts (41, 42) are joined to one another.

3. The structure according to anyone of claims 1 and 2, wherein one (41) of the clip parts (41, 42) has a pawl (48) and the other clip part (42) has a recess (95) to receive the pawl (48) for joining the clip parts (41, 42) to one another.

4. The structure according to claim 3, wherein one (41) of the clip parts (41, 42) has a plurality of pawls (48, 49) and the other clip part (42) has a plurality of corresponding recesses (77, 95) for receiving the pawls (48, 49).

5. The structure according to anyone of the preceding claims, wherein one (41) of the clip parts (41, 42) has a projection (51) and the other clip part (42) has a hole (87) through which the projection (51) extends to engage a retainer (30) when the clip parts (41, 42) are joined to one another.

6. The structure according to claim 5, wherein the one clip part (41) has a further projection (52) extending opposite to the first-mentioned projection (51) for engaging another retainer part.
